# EUROPEAN PATENT SPECIFICATION

(11) **EP 1 594 920 B1**
(45) Date of publication and mention of the grant of the patent: **31.12.2008**
(21) Application number: 03815735.0
(22) Date of filing: 07.02.2003
(51) Int. Cl.: C08L 23/16

(54) **THERMOPLASTIC RESIN COMPOSITION, PROCESS FOR MANUFACTURE AND USE THEREOF**
THERMOPLASTISCHE HARZZUSAMMENSETZUNG UND HERSTELLUNGSVERFAHREN DAFÜR
COMPOSITION DE RESINE THERMOPLASTIQUE, SON PROCEDE DE FABRICATION ET D'UTILISATION

(43) Date of publication of application: 16.11.2005
(73) Proprietor: Du Pont-Mitsui Polychemicals Co., Ltd., Tokyo 105-7117 (JP)
(72) Inventor: NAKANO, Shigenori, Ichihara-shi, Chiba 290-0035 (JP); MAKI, Nobuyuki, Ichihara-shi, Chiba 299-0125 (JP); ICHINOSEKI, Chikara, Narashino-shi, Chiba 275-0026 (JP)
(74) Representative: Cresswell, Thomas Anthony
(86) International application number: PCT/JP2003/001312
(87) International publication number: WO 2004/069920

(56) References cited:
- EP-A- 0 613 487
- EP-A- 0 922 729
- EP-A- 1 023 387

## Description

### Technical Field

The present invention relates to a thermoplastic resin composition that can produce a molded article having good processability, workability, scratch resistance, abrasion resistance, stiffness, surface hardness, stain resistance, heat-resistance and visual qualities (matted appearance), and having surface properties that the sliding friction coefficient is small; a process for manufacture and a use thereof. More specifically, the present invention relates to the thermoplastic resin composition, containing an ionomer as major component, which is suitable for use of building materials such as flooring materials, handrails and wall papers, car interior-exterior parts, toys, stationery and sundries ; the process for manufacture and the use thereof.

### Background Art

An ionomer in which carboxyl group of an ethylene/(meth)acrylic acid copolymer, containing 2 to 30% by weight of unsaturated carboxylic acid, is neutralized by metal ion, shows excellent abrasion resistance and transparency due to ion crosslinkage when compared with other ethylene copolymers. It has been already known by Japanese laid-open Patent Application SHO 60(1985)-127149, for example, that the ionomer is used for improving surface scratch resistance of building materials and car interior-exterior parts utilizing such properties. It is described in the publication that car interior-exterior materials having excellent surface gloss and scratch resistance can be obtained. It is also known by Japanese laid-open Patent Application HEI 8(1996)-254004 that in building material sector, the ionomer resin is used for an surface layer of non-PVC type flooring materials in order to prevent abrasion and scratch of the materials, which are caused by moving desks or chairs, or due to friction in walking.

The above mentioned moldings whose surface layer is ionomer, however, requires a measure coping with excessive gloss due to good transparency and surface smoothness which are characteristics of ionomer. For example, a method such as making matted pattern with embossing roll has been taken. This method, however, has a defect that it was difficult to put it use in producing a three-dimensional type molding such as handrail or pipe by profile extrusion.

Further, even if a matted sheet is produced using embossing roll, there was such a problem that matted pattern disappears when the above sheet is put into a foam oven in the process of heating secondarily such as manufacturing a foamed sheet. For resolving the problem, the following two methods have been taken. One is to maintain matted appearance by laminating a matted film on the foamed sheet after the process of the foam oven. And the other is to make matted pattern on the foamed sheet again by passing through the embossing roll. Nevertheless, the problem in the case of putting it to practical use has been pointed out. That is, trouble which the foamed sheet often melts to stick to heat roll due to the properties of ionomer easy to adhere to metal.

Different from the above method, some ways that cause matted appearance to the resin itself are already known. For example, the ways blending polymers having poor compatibility each other or adding a polymer such as a rubber-like material having different degree of viscosity are known by Japanese laid-open Patent Application SHO 61(1986)-37836 or Japanese laid-open Patent Application HEI 4(1992)-86260, etc. As a similar way to these, use of an ionomer composition modified with styrene/unsaturated carboxylic acid copolymer is known by Japanese laid-open Patent Application HEI 11(1999)-140251, and the effects of matted appearance and improved heat-resistant are confirmed. Nevertheless, since they are the ways using the poor compatibility, the ionomer composition still possesses some problems which spoil the characteristics of ionomer, such as strong whitening when the sheet is folded, decrease of abrasion resistance, etc.

In the reference EP 1023387 a thermoplastic alloy composition is described. The composition is referred to as a calenderable ETP-TPO and comprises
(a) thermoplastic alloy composition comprising a melt blend of
   (i) 10 to 40 wt. % polypropylene,
   (ii)15 to 55 wt. % uncrosslinked ethylene propylene copolymer rubber,20 to 60 wt. % of an ionomeric copolymer of ethylene, an alpha, beta-unsaturated C₃-C₈ carboxylic acid, and optionally one or more softening comonomers copolymerisable with ethylene, and
   (iii) 1 to 5 wt. % of a copolymer of ethylene and glycidyl acrylate or glycidyl methacrylate, and
(b) 1 to 15 parts by weight per hundred parts of the thermoplastic alloy composition of an ethylene/alkyl (meth)acrylate copolymer.
The patent publication EP 0613487 describes a thermoplastic alloy composition comprising a blend of
(a) 10 to 40 wt. % polypropylene;
(b) 15 to 50 wt. % uncrosslinked ethylene propylene copolymer rubber;
(c) 20 to 60 wt. % of an ionomeric copolymer of ethylene and an alpha, beta-unsaturated C₃-C₈ carboxylic acid; and (d) 1 to 5 wt. % of a copolymer of ethylene and glycidyl acrylate or glycidyl methacrylate.

For the above reasons, the present inventors have studied ways adding the heat resistance and the matted properties without causing the whitening by folding, while best utilizing excellent abrasion resistance and scratch resistance of ionomers. As the result, we have finally found that the ionomer composition having required performance can be obtained when blending ionomer with ethylene copolymer and propylene/α-olefin copolymer mentioned below in specific amount ratio. We have also found that the composition can provide moldings having high stiffness, high surface hardness and good slipping properties.

Therefore, an object of the present invention is to provide a thermoplastic resin composition which has excellent processability, workability, abrasion resistance, scratch resistance, stiffness, surface hardness, stain resistance, visual qualities (matted appearance), heat-resistance, etc. Another object of the present invention is to provide a molded article obtained from the composition having excellent surface characteristics, and especially, to provide a surface material for multi-layer material showing excellent surface characteristics.

### Disclosure of the Invention

The present invention relates to a thermoplastic resin composition comprising 73 to 95.5 parts by weight of (A) an ionomer wherein 20 to 90% of carboxyl group of ethylene/(meth)acrylic acid copolymer is neutralized by metal ion; 0.5 to 7 parts by weight of (B) a copolymer of ethylene or α-olefin, containing glycidyl (meth)acrylate or unsaturated glycidyl ether, optionally further containing vinyl ester or unsaturated carboxylic acid ester ; and 4 to 20 parts by weight of (C) a propylene/α-olefin copolymer.

The present invention also relates to a method for producing the above mentioned thermoplastic resin composition having various excellent properties and to the application of said thermoplastic resin composition.

### Preferred Embodiments of the Invention

Ionomer (A) used in the present invention is the one wherein 20 to 90 mol %, preferably 30 to 85 mol % of the carboxyl group of the ethylene/(meth)acrylic acid copolymer is neutralized by metal ion. Next, the ethylene/(meth) acrylic acid copolymer as a base polymer is a copolymer wherein the content of (meth)acrylic acid is in the range of 2 to 30% by weight, preferably 3 to 25% by weight , and may be not only copolymer of ethylene and acrylic or methacrylic acid but also multi-monomer type copolymer wherein (an)other monomer(s) is(are) optionally copolymerized. In the case of using ionomer whose acid content is less than the above range, it is difficult to obtain a composition having excellent abrasion resistance and matted appearance.

As other monomer which may copolymerize optionally, there can be exemplified vinyl ester such as vinyl acetate, vinyl propionate; unsaturated carboxylic acid ester such as methyl acrylate, ethyl acrylate, isopropyl acrylate, isobutyl acrylate, n-butyl acrylate, isooctyl acrylate, 2-ethylhexyl acrylate, methyl methacrylate, ethyl methacrylate, isobutyl methacrylate, dimethyl maleate, diethyl maleate; carbon monoxide and sulfur dioxide. Though the monomer may be copolymerized in the range of 0 to 40%, preferably 0 to 30% by weight, an increase in the content of the other monomer generally makes it harder to obtain a composition having excellent abrasion resistance, scratch resistance and heat resistance. Therefore, it is preferable to use the copolymer not containing the other monomer, or even if it contains the other monomer, it is preferable to use it containing the monomer in the range of not more than 20% by weight.

It is desirable to use the ethylene/(meth)acrylic acid copolymer which has a melt flow rate in a range of 1 to 1000 g/10 min, preferably 2 to 800 g/10 min, as determined at a temperature of 190°C and under a load of 2160 g. The above copolymer can be obtain by radical copolymerization under high temperature and high pressure.

Ionomer (A) wherein 20 to 90 mol %, preferably 30 to 85 mol % of carboxyl group of the above copolymer is neutralized with metal ion is used. In this case, as metal ion, divalent metal such as zinc or alkaline earth metal, for example, magnesium and calcium are preferable. A combination of divalent metal and other metal, for example, alkali metal such as lithium, sodium and potassium, may be used. That is, by using divalent metal for at least one part of metal ions, a composition having excellent matted appearance (silky appearance), heat resistance, retention of matted pattern, etc, can be obtained easier comparing with ionomer containing alkali metal singly or alkali metals in combination, which do not contain any divalent metals.

Further, considering molding properties, mechanical properties, miscibility with other component, etc, ionomer having a melt flow rate in a range of 0.01 to 100 g/10 min, more desirably 0.1 to 50 g/10 min, as determined at 190°C under a load of 2160 g is preferably used.

In the present invention, copolymer (B) is a copolymer of ethylene or α-olefin, containing glycidyl (meth)acrylate or unsaturated glycidyl ether, optionally further containing vinyl ester or unsaturated carboxylic acid ester, wherein the α-olefin has about 3 to 8 carbon atoms such as propylene or 1-butene. As the component (B), the copolymer of ethylene is especially preferable.

As glycidyl (meth)acrylate or unsaturated glycidyl ether, glycidyl acrylate, glycidyl methacrylate, vinyl glycidyl ether, allyl glycidyl ether, 2-methyl allyl glycidyl ether, etc, can be cited.

The copolymer of ethylene or α-olefin with above mentioned glycidyl monomer does not need to be a binary copolymer and may be a multi-monomer type copolymer in which (an) other monomer(s), for example, vinyl ester or unsaturated carboxylic acid ester is(are) copolymerized. Examples of other monomer can be the monomer already given above as other monomer of ethylene/ (meth) acrylic acid copolymer which is the base polymer of ionomer (A). Moreover, in the present invention, multi-monomer type copolymer containing ethylene, α-olefin and the above mentioned glycidyl monomer can be used.

In the (B) copolymer of ethylene or α-olefin with glycidyl monomer, ethylene or α-olefin is preferably contained in the range of 50 to 99% by weight, especially 52 to 98% by weight, glycidyl monomer in the range of 0.5 to 20% by weight, especially 1 to 18% by weight, and the above mentioned other monomer in the range of 0 to 49.5% by weight, especially 0 to 40% by weight. When the content of glycidyl monomer is too low, improvement of heat resistance and retention of matted pattern is not remarkable. On the other hand, when the content is too high, reactivity to ionomer is too high and sometimes a problem to cause a difficulty of molding due to increase of the resin viscosity and/or to cause gel formation in the composition may occur.

The above copolymer may be a random copolymer or a graft copolymer. Generally, it is preferable to use random copolymer in view of uniformity of reaction to ionomer. The random copolymer can be obtained by radical copolymerization under a condition of high temperature and high pressure.

In the case of using ethylene copolymer as the above mentioned copolymer, it is preferable to use copolymer having a melt flow rate in a range of 0.01 to 1000 g/10 min, especially 0.1 to 200 g/10 min as determined at 190°C under a load of 2160 g.

In the present invention, (C) propylene/α-olefin copolymer is used with (A) ionomer and (B) copolymer of ethylene or α-olefin with glycidyl monomer. By using the propylene/α-olefin copolymer that can be easily dispersed in other components, a resin composition having excellent visual qualities, heat-resistance, abrasion resistance, scratch resistance, stain resistance, mechanical strengths, etc, can easily be obtained.

Propylene/α-olefin copolymer (C) used in the present invention is a copolymer of propylene as a main component and other α-olefin, which has a density of preferably 870 to 930 kg/m³, more preferably 880 to 920 kg/m³ and a melt flow rate of preferably 0.1 to 100 g/10 min, more preferably 0.2 to 80 g/10 min as determined at 230°C under a load of 2160 g.

In the copolymer(C), α-olefin copolymerized with propylene preferably has 2 to 12 carbon atoms, more preferably 2 to 10 carbon atoms. Specifically, as the α-olefin, ethylene, 1-buten, 1-hexene, 1-octene, 1-decene, 1-dodecen, 4-methyl-1-pentene, can be exemplified. The α-olefin may be a single, or two or more kinds.

The copolymer(C) may be a random copolymer or a block copolymer. Especially suitable random copolymer is a random copolymer of propylene and ethylene or a random copolymer of propylene, ethylene and (an)other α-olefin(s), wherein the content of propylene is in the range of 85 to 99.9% by weight, preferably 90 to 99.5% by weight. These are crystalline polymers produced by copolymerization in the presence of a stereospecific catalyst.

The above block copolymer which can be used as copolymer (C), can be obtained by polymerization or copolymerization of propylene and other α-olefin in sequential manner. Generally the block copolymerization is carried out by combining one or more polymerization stages comprising (2) copolymerization of propylene and a little much α-olefin and/or (3) polymerization of α-olefin, after (1) polymerization of propylene. In the above (1) polymerization of propylene, there is a case of copolymerizing small amount of α-olefin. And there is another case of copolymerizing small amount of propylene in the (3) polymerization of α-olefin. In either case, the above block copolymer can be obtained by the above multi stage polymerization in the presence of a stereospecific catalyst. The suitable propylene/α-olefin block copolymer is a block copolymer of propylene and ethylene containing about 60 to 95% by weight of (1) propylene polymer block.

A blend ratio of each component (A), (B) and (C) in the thermoplastic resin composition of the present invention, is such a ratio as 73 to 95·5 parts by weight of ionomer (A), 0·5 to 7 parts by weight of copolymer (B) and 4 to 20 parts by weight of propylene/α-olefin copolymer (C), preferably 81 to 94 parts by weight of (A), 1 to 4 parts by weight of (B) and 5 to 15 parts by weight of (C), when these total quantity is 100 parts by weight.

The thermoplastic resin composition of the present invention can be obtained by melt-blending ionomer (A), ethylene or α-olefin / glycidyl monomer copolymer (B) and propylene/α-olefin copolymer (C). On the occasion of melt-blending, common blending devices such as screw extruder, roll mixer and Banbury mixer can be used. In addition, although melt-blending can be conducted by combining above three components simultaneously, most preferred is the way of melt-blending (B) and (C) beforehand, and then melt-blending with (A). This method has an advantage to stably produce the composition having many superior properties with good quality, because (B) is diluted by (C) and then it leads to uniform and not local reaction to (A). The method like mixing (C) after melt-blending (A) and (B) should be avoided, because gels might be formed by local reaction, when such a method is applied.

In the resin composition of the present invention, within limits not detracting the object of the present invention, other polymers and various additives can be compounded. As an example of such other polymers, other polyolefin such as ethylene/α-olefin copolymer having a density of 870 to 930 kg/m³, for example, which is produced by a metallocene catalyst; and linear low density polyethylene which is produced by other type of catalyst; can be cited. Said other polyolefin can be combined in a ratio of, for example, not more than 10 parts by weight to 100 parts by weight of the total of the above (A), (B) and (C).

In addition, as the above additives, antioxidants, heat stabilizers, light stabilizers, ultraviolet absorption agents, pigments, dye stuffs, slipping agents, anti-blocking agents, antistatic agents, anti-mold agents, antibacterial agents, flame retardants, flame retardant aids, cross linking agents, cross linking co-agents, foaming agents, foaming co-agents, inorganic fillers and fibrous reinforcements can be exemplified.

The resin composition of the present invention can be molded into various shapes of articles by various molding methods such as extrusion molding, injection molding, compression molding and blow molding. For example, a molded article such as sheet or film produced using blown film machine or cast film/sheet machine exhibits matted (silky) appearance and has characteristics of excellent stiffness, surface hardness, stain resistance and visual qualities (matted appearance), while maintaining characteristics of ionomer such as non-whitening at stretching or folding, excellent abrasion resistance and scratch resistance. The molded article such as sheet or film may be a mono-layer or a laminate with an adhesive resin, where the laminate is produced by coextrusion molding machine in order to improve adhesive properties with various substrates.

A representative example of the adhesive resin laminated on resin composition of the present invention can be a single resin or blend of two or more resins selected from ethylene/unsaturated carboxylic acid copolymer, ethylene/unsaturated carboxylic acid/unsaturated carboxylic acid alkyl ester terpolymer, ethylene/unsaturated carboxylic acid alkyl ester copolymer, ethylene/vinyl ester copolymer, ethylene/unsaturated carboxylic acid alkyl ester/carbon monoxide terpolymer and grafted products of these copolymer/terpolymer with an unsaturated carboxylic acid.

In order to improve antistatic properties and high frequency welder properties of the sheet and film obtained from the resin composition of the present invention, the composition may be coextruded with a specific potassium ionomer, a composition of the potassium ionomer with polyhydric alcohol, or a composition further with optional ethylene polymer, by using various molding methods, preferably by coextrusion molding machine. Even if an antistatic agent is not added to the resin composition of the present invention, the potassium ionomer layer laminated plays a role to remarkably reduce charge decay time of the resin composition layer. On this account it is desirable to use the potassium ionomer, the composition of the potassium ionomer with polyhydric alcohol, or the composition further with optional ethylene polymer, having surface resistivity of not more than 10¹¹ Ω, preferably not more than 10¹⁰ Q under a condition of 23°C, in 50% relative humidity.

When a potassium ionomer is used where ethylene/(meth)acrylic acid copolymer as a base polymer having too low acid content or the potassium ionomer having too low neutralization degree by a potassium ion, it becomes not easy to obtain the potassium ionomer or its composition having the surface resistivity in the above mentioned range. Therefore it is preferable to use a potassium ionomer of ethylene/(meth)acrylic acid copolymer, for example, wherein the content of (meth)acrylic acid is 10 to 25% by weight, preferably 12 to 20% by weight and the neutralization degree by potassium ion is not less than 60%, preferably not less than 70%.

The polyhydric alcohol is a chemical compound containing two or more alcoholic hydroxyl groups. As such an alcohol, polyoxyalkylene glycol, having preferably a molecular weight of 2000 or less, more preferably 1000 or less, such as polyethylene glycol, polypropylene glycol, polytetramethylene glycol, polyoxyethylene/polyoxypropylene glycol; glycerin, trimethylol propane, pentaerythritol, sorbitol, diglycerin, triglycerin, and ethylene oxide adducts or partial esters thereof can be cited.

The preferred combined amount of the polyhydric alcohol, for example, is in the range of 0 to 15% by weight, preferably 0 to 10% by weight, based on the potassium ionomer of ethylene/(meth)acrylic acid copolymer.

As far as the surface resistivity satisfies the above range, ethylene polymer can be combined with the potassium ionomer or the composition comprising the potassium ionomer and polyhydric alcohol. The preferred content of the ethylene polymer can be, for example, 0 to 85% by weight, preferably 0 to 80% by weight. As the ethylene copolymer, high pressure low density polyethylene, linear low density polyethylene, metallocene polyethylene, a copolymer of ethylene with vinyl ester such as vinyl acetate and vinyl propionate, a copolymer of ethylene with an unsaturated carboxylic acid ester such as methyl acrylate, ethyl acrylate, isopropyl acrylate, n-butyl acrylate, isobutyl acrylate, n-hexyl acrylate, isooctyl acrylate, methyl methacrylate, dimethyl maleate and diethyl maleate, and a terpolymer of ethylene/carbon monoxide/vinyl ester or unsaturated carboxylic acid ester can be cited.
(1) A mono-layer sheet, (2) a multi-layer sheet comprising an outer layer of the composition of the present invention and an inner layer of the aforementioned adhesive resin or (3) a multi-layer sheet same as the multi-layer sheet (2) except having a middle layer of potassium ionomer or a composition of the potassium ionomer with a polyhydric alcohol or a composition further with optional ethylene polymer, can be laminated on the surface of a substrate by thermal lamination method, heat roll method, heat compression molding method, dry lamination method (adhesive coating method), etc.

As the above substrate, papers or printed papers, various metallic foils, various metal plates such as steel plate, wooden materials such as wood or plywood, films, sheets or molded articles of polyolefin such as polyethylene, polypropylene, TPO, etc, or similar films, sheets or molded articles containing various fillers, sheets or tiles of PVC and woven cloths or non-woven fabrics can be cited.

As examples of other extrusion molding of resin composition of the present invention, method for heat-bonding the resin composition on a surface of another substrate with extrusion coater to form a laminate can be exemplified. As the substrate, papers, various metallic foils, various metal plates such as steel plate, films or sheets of polyolefin, woven cloths, non-woven fabrics, etc. can be cited. In the extrusion coating, good balance between extrusion moldability and surface properties such as abrasion resistance, scratch resistance and matted appearance can be achieved by managing to control MFR and proportion of components constituting the resin composition of the present invention as shown later in Examples.

When the resin composition of the present invention is laminated on the surface of another substrate by an extrusion coater, the resin composition may be laminated directly, or laminated through an adhesive resin layer by a co-extrusion coater. A representative example of the adhesive resin can be a single resin or blended compositions of two or more resins selected from the aforementioned various ethylene copolymers and grafted products of the copolymers with an unsaturated carboxylic acid.

### [Examples]

In the following, the invention is explained by examples, but the invention is not limited to these examples.

Compositions and properties of raw materials used in Examples and Comparative examples, and methods used to evaluate properties of sheets and films obtained therefrom are described below.

### 1. Raw materials

(1) Ionomer (A)
   Ionomer 1
      Base polymer: Ethylene/methacrylic acid copolymer (methacrylic acid content: 11% by weight),
      Metallic cation source: Zinc
      Neutralization degree: 63% by mol
      MFR: 5.0 g/10 min
   Ionomer 2
      Base polymer: Ethylene/methacrylic acid copolymer (methacrylic acid content: 10% by weight),
      Metallic cation source: Zinc
      Neutralization degree: 68% by mol
      MFR: 1.3 g/10 min
   Ionomer 3
      Base polymer: Ethylene/methacrylic acid copolymer (methacrylic acid content: 10% by weight)
      Metallic cation source: Zinc
      Neutralization degree: 80% by mol
      MFR: 0.9 g/10 min
(2) α-olefin/glycidyl monomer copolymer (B) GMA copolymer:
   Ethylene/glycidyl methacrylate copolymer (glycidyl methacrylate content: 12% by weight)
   MFR: 3.0 g/10 min
(3) Propylene/α-olefin copolymer (C)
   Random PP (propylene /ethylene random copolymer (Grand Polypro F229BA from Grandpolymer Co., density: 900 kg/m³, MFR: 9.0 g/10 min (230°C))
   Block PP (propylene/ethylene block copolymer (Grand Polypro F707V from Grandpolymer Co., density: 900 kg/m³, MFR: 6.5 g/10 min (230°C))

### 2.Properties evaluating method

Film properties were evaluated by using a blown film of 50 µm thickness produced by a method mentioned hereunder. Hot kettle resistance was evaluated by using a T-die sheet of 200 µm thickness produced by a method mentioned hereunder. Surface hardness and stiffness were measured using a compression molding sheet of 3 mm thickness produced under the condition of 180°C x 5 minutes heating, 180°C x 5 minutes compressing and 20°C x 5 minutes cooling.
(1) Film observation (Gel formation)
   Gel formation in the aforementioned blown film was visually examined.
   No gel formation: No
   Many gels formation: Many
(2) Optical properties
   Gloss: Based on JIS Z8741
(3) Retention of matted pattern (visual qualities)
   A test film was placed in a gear oven heated to 180°C for 1 minute, taken out and cooled to room temperature. Gloss values of the test film before and after the heating were measured to compare each other. Gloss is greater than before the heating: × Gloss is not changed before and after the heating: ○
(4) Slipping properties
   Based on ASTM D1980A, sliding friction coefficient was measured from the ratio of a load (A) when the test film mounted on a holder of 63.5 mm square was slipped on the same film fixed on a base at a speed of 150 mm/min devided by a load (B) of a holder.
(5) Tensile properties
   Based on JIS K6781, elongation at break and formation of whitening were evaluated under the following conditions:
   Test speed: 500 mm/min
   Distance between clamps for holding the test film: 90 mm
   Length of line marked on the film for measurement: 40 mm.
(6) Heat sealability
   Based on JIS Z1707, the condition of sealed interface of test film of 15 mm width was observed when it was pealed off. For the observation, the test film was prepared by heat sealing under pressure for 1 second with a 10 mm width seal bar heated to 140°C and pealed off 24 hours later.
(7) Hot kettle resistance
   A kettle made of stainless steel containing 2.2 liters of hot water heated over a gas range was put directly on a test sheet of 200 µm produced by the method mentioned hereafter, and left for 1 minute. The hot kettle resistance was evaluated by the observation as follows.
   The test sheet was melt to stick the kettle: ×
   The test sheet was come off easily from the kettle, but shrunk a little: ○
   The test sheet was come off easily from the kettle, and not shrunk at all: ⊚
(8) Surface hardness
   Surface hardness was measured based on JIS K7215 using a 2 mm thickness sheet produced by the method mentioned hereafter.
(9) Stiffness
   Stiffness was measured based on JIS K7106 using a 2 mm thickness sheet produced by the method mentioned hereafter.

### [Examples 1-4]

A composition obtained by melt-blending GMA copolymer with Random PP or Block PP, and Ionomer 1 were melt-kneaded in a ratio shown in table 1. Then obtained mixture was molded into a film of 50 µm thickness using blown film machine in a condition of processing temperature of 190°C. Properties of the film were evaluated. And the obtained mixture was also molded into a sheet of 200 µm thickness with single screw extruder of 40 mm diameter that is equipped with T-die of 400 mm width under a condition of T-die temperature of 200°C. The hot kettle resistance of the sheet was measured.

In addition, a pressed sheet of 3 mm thickness was prepared by a method described hereunder and used for hardness and stiffness tests.

Results are shown in table 1.

### [Comparative example 1]

A film of 50 µm thickness, a sheet of 200 µm thickness and a sheet of 3 mm thickness were prepared from Ionomer 2 under the similar manner to Example 1 and film properties, hot kettle resistance, hardness and stiffness were evaluated by the same methods as Example 1. The results are jointly shown in table 1.

**Table 1**

| | Examples | | | | Comp. Example |
|---|---|---|---|---|---|
| Raw Materials (Weight Parts) | 1 | 2 | 3 | 4 | 1 |
| Ionomer 1 | 93 | 88 | 83 | 88 | |
| Ionomer 2 | | | | | 100 |
| GMA copolymer | (2) | (2) | (2) | (2) | |
| Random PP | (5) | (10) | (15) | | |
| Block PP | | | | (10) | |
| Blended materials | 7 | 12 | 17 | 12 | |

| Evaluation | | | | | |
|---|---|---|---|---|---|
| MFR(g/10 min) | 2.2 | 1.9 | 2.0 | 1.3 | 1.3 |
| Film observation (gel formation) | No | No | No | No | No |
| Optical properties **(before heating: Gloss)** | 16 | 18 | 21 | 18 | 110 |
| **(after heating: Gloss)** | 12 | 15 | 22 | 19 | 120 |
| **Retention of matted pattern** | ○ | ○ | ○ | ○ | × |
| **Slipping properties (friction coefficient)** | 0.6 | 0.6 | 0.5 | 0.6 | >1.5 |
| Tensile properties (Elongation: %) | >300 | >300 | >300 | >300 | 250 |
| Tensile properties (Whitening) | No | No | No | No | No |
| Heat sealability (N/15mm) | **1 (Peeled)** | **0.3 (Peeled)** | **0.6 (Peeled)** | **0.3 (Peeled)** | **15 (Welded)** |
| **Hot kettle resistance** | ⊚ | ⊚ | ⊚ | ⊚ | × |
| Surface hardness (Shore D) | 57 | 58 | 60 | 57 | 55 |
| Stiffness (MPa) | 230 | 240 | 250 | 240 | 220 |

### [Example 5, Comparative examples 2-3]

A composition obtained by melt-kneading GMA copolymer with Random PP and Ionomer 3 were fed to single screw extruder in a ratio of Ionomer 3 /GMA copolymer / random PP = 83 /2 /15 (the weight ratio) and melt-kneaded at resin temperature of 210°C to get resin composition pellets.

A film of 150 µm thickness was prepared from the pellets with mono-layer blown film machine at resin temperature of 210°C. Stain resistance of this film was evaluated using reagents shown in Table 2 according to JIS A 5705, A1454 method. Results are shown in Table 2.

In addition as comparison, a sheet of polyvinyl chloride (PVC) of 200 µm thickness having polymerization degrees of 1050 containing 20 parts of plasticizer DOP which was molded with roll at 160°C, and a film of coplymerized nylon 6/66 (UBE nylon 5033 B from Ube Industries, Ltd.) of 150 µm thickness which was molded with cast film machine were evaluated under the similar manner. The results are shown in table 2.

As appear from above results, the resin composition of the present invention shows superior stain resistance.

**Table 2**

| Reagents | Example 5 | Comp. Example 2 | Comp. Example 3 |
|---|---|---|---|
| | | PVC | Nylon 6/66 |
| 30% Sulfuric acid | - | - | B |
| 35% Hydrochloric acid | - | A(A) | B |
| 60% Nitric acid | - | B(A) | B |
| 100% Glacial acetic acid | - | - | Not measured |
| 5% Acetic acid | - | - | B |
| 10% Citric acid | - | - | A |
| 40% Sodium hydroxide | - | - | A |
| 20% Sodium carbonate | - | - | Not measured |
| 10% Aqueous ammonia | - | - | Not measured |
| 28% Aqueous ammonia | - | - | A |
| 5% Phenol aqueous solution | - | A | B |
| 95% Methanol | - | A | A |
| 95% Ethanol | - | A | A |
| 95% Acetone | - | A | - |
| 95% Ethyl acetate | - | B(B) | - |
| 95% Carbon tetrachloride | A | B(B) | - |
| 95% Benzene | - | B | - |
| 95% Oleic Acid | - | A | Not measured |
| Gasoline | -(A) | B(B) | - |
| Kerosene | - | A | - |
| Animal oil (Lard) | - | - | - |
| Milk | - | - | - |
| Soy source | - | - | - |

| | | | |
|---|---|---|---|
| Observation results -: No swelling, no color change A: Slight swelling / (A) slight color change B: Apparent swelling / (B) apparent color change | | | |

### [Example 6]

A three-layer film (thickness: outer layer/middle layer/inner layer = 80/60/60 µm) comprising an outer layer of the resin composition used in Example 5, a middle layer of a composition composed of 70% by weight of potassium ionomer (neutralization degree: 80%, MFR: 0.6 g/10 min) whose base resin is a composition composed of 50 parts by weight of ethylene/methacrylic acid copolymer (methacrylic acid content: 17.5% by weight, MFR:60 g/10 min) and 50 parts by weight of ethylene/methacrylic acid/isobutyl acrylate copolymer (methacrylic acid content: 5% by weight, isobutyl acrylate content: 10% by weight and MFR: 33 g/10 min) and 30% by weight of ethylene/n-butyl acrylate/carbon monoxide copolymer (n-butyl acrylate content: 30% by weight, carbon monoxide content: 10% by weight, MFR: 25 g/10 min),and an inner layer of a composition composed of 70% by weight of ethylene/n-butyl acrylate/carbon monoxide terpolymer (n-butyl acrylate content: 30% by weight, carbon monoxide content: 10% by weight, MFR: 25 g/10 min) and 30% by weight of ethylene/methacrylic acid copolymer (methacrylic acid content: 9% by weight, MFR: 3 g/10 min) was prepared with multi-layer blown film machine.

The obtained film and a floor tile made by commercially available PVC (thickness 3 mm) were piled up so that the inner layer of the film contacted an outer surface of the tile and heat-pressed at 140°C for 5 seconds with compression molding machine to get a laminated article. The obtained laminated article has an improved visual qualities, stain resistance and scratch resistance (reciprocating sliding abrasion) at the surface, and a good adhesion (13 N/25 mm at 90° peeling) between the multi-layer film and the floor tile made by PVC.

### [Example 7]

A three-layer film (thickness: outer layer/middle layer/inner layer = 100/50/50 µm) comprising an outer layer of the resin composition used in Example 5, a middle layer of a composition composed of 50 % by weight of potassium ionomer (neutralization degree: 80%, MFR: 0.6 g/10 min) whose base resin is a composition composed of 50 parts by weight of ethylene/methacrylic acid copolymer (methacrylic acid content: 17.5% by weight, MFR: 60 g/10 min) and 50 parts by weight of ethylene/methacrylic acid/isobutyl acrylate copolymer (methacrylic acid content: 5% by weight, isobutyl acrylate content: 10% by weight and MFR: 33 g/10 min), and an inner layer of ethylene/vinyl acetate copolymer (vinyl acetate content: 14% by weight, MFR: 2.5 g/10 min) was prepared with multi-layer cast film machine.

The obtained film and a 3 mm thickness compression molding sheet of a composition of 60% by weight of calcium carbonate and 40% by weight of ethylene/vinyl acetate copolymer (vinyl acetate content: 28% by weight, MFR: 15 g/10 min) were piled up so that the inner layer of the film contacted an outer surface of the pressed sheet and heat-pressed at 140°C for 5 seconds with compression molding machine to get a laminated article. The obtained laminated article has good visual qualities, stain resistance and scratch resistance (reciprocating sliding abrasion) at the surface, and does not cause whitening at bending. The laminated article is suitable for flooring materials.

### [Example 8]

A three-layer film (thickness: outer layer/middle layer/inner layer = 100/30/30 µm) comprising an outer layer of the resin composition used in Example 5, a middle layer of potassium ionomer (neutralization degree: 80 %, MFR: 0.6 g/10 min) whose base resin is a composition composed of 50 parts by weight of ethylene/methacrylic acid copolymer (methacrylic acid content: 17.5% by weight, MFR: 60 g/10 min) and 50 parts by weight of ethylene/methacrylic acid/isobutyl acrylate copolymer (methacrylic acid content: 5% by weight, isobutyl acrylate content: 10% by weight and MFR: 33 g/10 min), and an inner layer of ethylene/vinyl acetate copolymer (vinyl acetate content: 14% by weight, MFR: 2.5 g/10 min) was prepared with multi-layer cast film machine.

The obtained film and a printed decorative plywood were piled up so that the inner layer of the film contacted the printed surface of the decorative plywood and heat-pressed at 105°C for 60 seconds with compression molding machine to get a laminated article. The obtained laminated article has a good stain resistance and scratch resistance (reciprocating sliding abrasion) even without vanish coating at the surface, and improved visual qualities.

### Industrial Applicability

The resin composition of the present invention and molded articles therefrom show good visual qualities (matted appearance), while maintaining the characteristics of ionomer that shows excellent scratch resistance and abrasion resistance, and does not show whitening at stretching or bending. Further as they are superior in heat resistance, matted appearance is retained when exposed to high temperature at secondary processing etc.

For example, when a multi-layer sheet produced by laminating a surface layer comprising the above mentioned resin composition on a substrate containing foamable resin layer compounded with a foaming agent, a foaming co-agent, an inorganic filler etc, is provided into a foam oven and foamed, not only an adhesion trouble to a heat roll in the oven during foaming is avoided, but matted appearance is not spoiled.

Furthermore, resin composition of this invention and molded articles therefrom possess an advantage that they show greater film strengths such as tear strength and tensile strength at break in comparison with ionomer, and further they generate moderate slip properties without additives such as slipping agents or anti-blocking agents. In addition, they possess other advantages such as excellent stain resistance required in the outer layer sheet of building materials.

Furthermore, by using propylene/α-olefin copolymer (C), heat resistance of the composition is largely improved, and sheet strengths such as stiffness or surface hardness is improved in comparison with ionomer. From these characteristics, the resin composition of the present invention is suitable for surface layer sheets, decorative sheets, stain resistant sheets or protective sheets of general flooring materials, flooring materials for automobile, building materials for stab boards of wood or plywood, steel plates and wall papers, furniture and signboard; molded articles such as handrails; leather like covers/skins for car interior or exterior parts, bags, pocket books and dictionaries; molded articles or surfaces for curtains, partitioning sheets, industry use sheets, desk mats, table cloths, mouse pads, marking films, toys and stationery; carpet surface or bottom; sheets to be used in vacuum form process.

## Claims

1. A thermoplastic resin composition comprising 73 to 95·5 parts by weight of (A) an ionomer wherein 20 to 90% of carboxyl group of ethylene/(meth)acrylic acid copolymer is neutralized by metal ion; 0·5 to 7 parts by weight of (B) a copolymer of ethylene or α-olefin, containing glycidyl (meth)acrylate or unsaturated glycidyl ether, optionally further containing vinyl ester or unsaturated carboxylic acid ester; and 4 to 20 parts by weight of (C) propylene/α-olefin copolymer.

2. The thermoplastic resin composition according to claim 1, wherein at least part of metal ion in the ionomer (A) is divalent metal ion.

3. A process for manufacturing the thermoplastic resin composition described in Claim 1, which is **characterized by** melt-blending the ionomer (A) with melt-blended mixture of (B) the copolymer of ethylene or α-olefin, containing glycidyl (meth)acrylate or glycidyl unsaturated ether, or optionally further containing vinyl ester or unsaturated carboxylic acid ester and (C) the propylene/α-olefin copolymer.

4. A molded article comprising the thermoplastic resin composition described in Claims 1 or 2.

5. The molded article according to Claim 4, wherein the molded article is a surface material for a multi-layer material.

6. A multi-layer material comprising the surface material described in claim 5 laminated onto a mono-layer substrate or a multi-layer substrate.

7. The multi-layer material according to claim 6, wherein at least a part of the substrate is a foamed layer.

## Patentansprüche

1. Thermoplastische Harzzusammensetzung, umfassend 73 bis 95,5 Gew.-teile (A) eines Ionomeren, wobei 20 bis 90 % der Carboxylgruppen eines Ethylen/(Meth)acrylsäure-Copolymeren durch Metallionen neutralisiert sind; 0,5 bis 7 Gew.-teile (B) eines Copolymeren aus Ethylen oder einem α-Olefin, das Glycidyl(meth)acrylat oder einen ungesättigten Glycidylether enthält und ferner gegebenenfalls einen Vinylester oder einen ungesättigten Carbonsäsureester enthält; und 4 bis 20 Gew.-teile (C) eines Propylen/α-Olefin-Copolymeren.

2. Thermoplastische Harzzusammensetzung nach Anspruch 1, wobei es sich mindestens bei einem Teil der Metallionen im Ionomeren (A) um zweiwertige Metallionen handelt.

3. Verfahren zur Herstellung der thermoplastischen Harzzusammensetzung nach Anspruch 1, das **gekennzeichnet ist durch** das Vermischen in der Schmelze des Ionomeren (A) mit dem in der Schmelze vermischten Gemisch aus (B) des Copolymeren von Ethylen oder einem α-Olefin, das Glycidyl(meth)acrylat oder einen ungesättigten Glycidylether enthält oder gegebenenfalls ferner einen Vinylester oder einen ungesättigten Carbonsäureester enthält, und (C) dem Propylen/α-Olefin-Copolymeren.

4. Formkörper, umfassend die thermoplastische Harzzusammensetzung nach Anspruch 1 oder 2.

5. Formkörper nach Anspruch 4, wobei es sich beim Formkörper um ein Oberflächenmaterial für ein einlagiges Material handelt.

6. Mehrlagiges Material, umfassend das Oberflächenmaterial nach Anspruch 5, das auf ein einlagiges Substrat oder auf ein mehrlagiges Substrat laminiert ist.

7. Mehrlagiges Material nach Anspruch 6, wobei es sich bei mindestens einem Teil des Substrats um eine geschäumte Schicht handelt.

## Revendications

1. Composition de résine thermoplastique comprenant 73 à 95,5 parties en poids de (A) un ionomère dans lequel 20 à 90 % du groupe carboxyle du copolymère éthylène/ acide (méth)acrylique sont neutralisés par un ion métallique ; 0,5 à 7 parties en poids de (B) un copolymère d'éthylène ou d'α-oléfine, contenant du (méth)acrylate de glycidyle ou de l'éther glycidylique insaturé, contenant en outre, en option, de l'ester vinylique ou de l'ester d'acide carboxylique insaturé ; et 4 à 20 parties en poids de (C ) un copolymère propylène/α-oléfine.

2. Composition de résine thermoplastique selon la revendication 1, dans laquelle au moins une partie de l'ion métallique dans l'ionomère (A) est un ion de métal divalent.

3. Procédé de fabrication de la composition de résine thermoplastique décrite dans la revendication 1, qui se **caractérise par** le mélange à l'état fondu du ionomère (A) avec un mélange mélangé en fusion de (B) le copolymère d'éthylène ou d'α-oléfine, contenant du (méth)acrylate de glycidyle ou de l'éther glycidylique insaturé, ou contenant en outre, en option, de l'ester vinylique ou de l'ester d'acide carboxylique insaturé et de (C ) le copolymère propylène/α-oléfine.

4. Article moulé comprenant la composition de résine thermoplastique décrite dans la revendication 1 ou 2.

5. Article moulé selon la revendication 4, lequel article moulé est un matériau de surface pour un matériau multicouche.

6. Matériau multicouche comprenant le matériau de surface décrit dans la revendication 5 stratifié sur un substrat monocouche ou un substrat multicouche.

7. Matériau multicouche selon la revendication 6, dans lequel au moins une partie du substrat est une couche expansée.
